# EUROPEAN PATENT APPLICATION

(11) **EP 2 811 209 A1**
(43) Date of publication of application: **10.12.2014**
(21) Application number: 14171244.8
(22) Date of filing: 05.06.2014
(51) Int. Cl.: F16K 5/06

(54) **Valve with built-in filter**

(30) Priority: 06.06.2013 IT MI20130215 U
(71) Applicant: Tecnovielle S.p.A., 25065 Lumezzane Pieve (BS) (IT)
(72) Inventor: Bontempi, Antonio, 25060 COLLEBEATO BS (IT)
(74) Representative: Modiano, Micaela Nadia

(57) **Abstract**

A valve (1) comprising a valve body (2) provided with an inlet (3) and an outlet (4), a flow control element (7) being interposed between the inlet (3) and the outlet (4), the flow control element (7) being actuated by an actuation shaft (9), the valve (1) comprising a filtering element (8) accommodated in a seat defined in the flow control element (7).

## Description

The present invention relates to a valve with a built-in filter. More particularly, the invention relates to a valve with built-in filter that avoids clogging of the filter.

As is known, valves with built-in filter are commercially available in which the filter is arranged axially to the fluid passage direction, at the valve inlet.

A solution of this type, however, suffers drawbacks, due mainly to the fact that the filtered material tries to pass through the filtering surface that closes the basket filter, causing large variations in the load losses that are typical of the valve and/or substantially complete clogging of the passage of the fluid.

In order to be able to clean the filter of a valve of the known type, it is necessary to remove said filter from the valve body by means of mechanical tools such as spanners and/or pliers and then reassemble the filter.

These operations, which are costly in terms of time, require, as mentioned, the use of tools.

The aim of the present invention is to provide a valve with filter that allows to avoid clogging of the filter due to filtered material.

Within this aim, an object of the present invention is to provide a valve with filter in which the filter can be cleaned without having to extract it from the body of the valve.

Another object of the present invention is to provide a valve with filter in which the filter can be cleaned in emergency conditions even without interrupting the passage of fluid between the inlet and the outlet of the valve.

Another object of the present invention is to provide a valve with filter that is highly reliable, relatively simple to provide and at competitive costs.

This aim, as well as these and other objects that will become better apparent hereinafter, are achieved by a valve comprising a valve body provided with an inlet and an outlet, a flow control element being interposed between said inlet and said outlet, the flow control element being actuated by an actuation shaft, characterized in that it comprises a filtering element that is accommodated in a seat defined in said flow control element, said filter accommodation seat having an axis that is perpendicular to the axis of the inlet and of the outlet of said valve body.

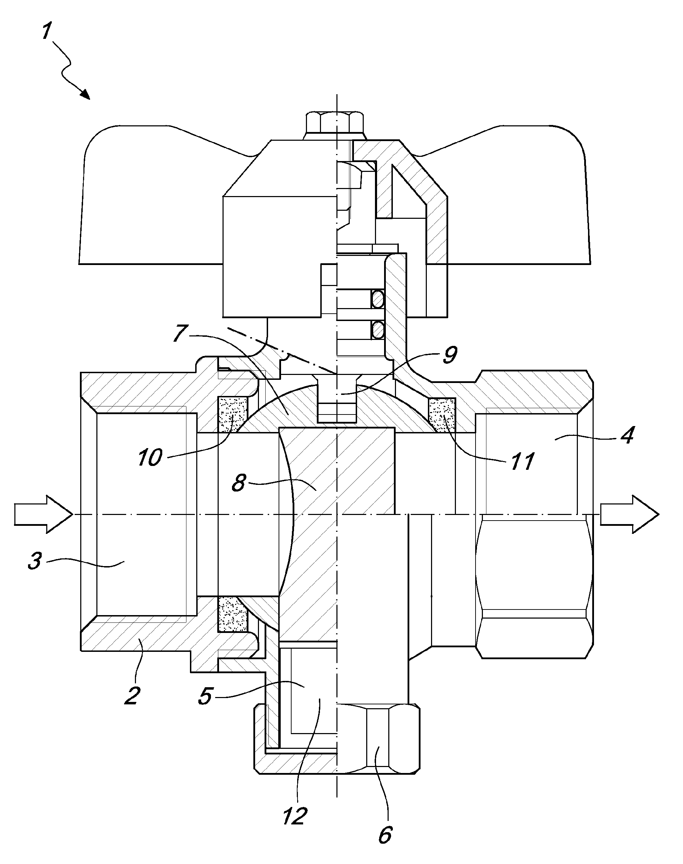

Further characteristics and advantages of the invention will become better apparent from the description of the valve with filter according to the present invention, illustrated by way of nonlimiting example in the accompanying drawing, wherein the only figure is a sectional view of the valve with filter according to the invention.

With reference to the figure, the valve with built-in filter, generally designated by the reference numeral 1, comprises a valve body 2, which is provided with an inlet 3, an outlet 4 and a drain 5 that is closed by a plug 6.

The valve body is provided internally with a flow control element 7, which conveniently can be spherical, frustum-shaped or of any other suitable shape, and accommodates internally a filtering element 8 that is arranged so as to rotate integrally with the flow control element. The rotation of the flow control element is provided by an actuation shaft 9.

The flow control element 7 is accommodated within the valve body in a condition that is suspended between two sealing gaskets 10 and 11 that ensure the hydraulic seal between the spherical flow control element 7 and the inlet 3 and the outlet 4 during the rotation of the spherical flow control element 7. The spherical flow control element has an axial passage for the passage of the fluid to be filtered and a passage that is perpendicular to the preceding one and accommodates the filtering element 8.

The flow control element 7 can move, by means of the actuation shaft 9, between a fully closed position, in which the flow control element 7 prevents fluid communication between the inlet 3 and the outlet 4, and a fully open position, in which the axial passage provides a fluid connection between the inlet 3 and the outlet 4.

The filtering element 8 is, as mentioned, accommodated in the seat of the flow control element 7, the axis of which is perpendicular to the axis of the fluid passage hole, both in the closed position and in the open position of the valve.

The filtering element is fixed to the flow control element 7 of the valve by interference between the outer surface of the filtering element and the inner surface of the accommodation hole, which is provided in the flow control element 7, and by providing a limited play with the upper surface of the plug 6 that abuts against the valve.

The reference numeral 12 designates a space at the bottom of the valve at the drain 5, which allows the collection, settling, of the filtered material.

By using the filtering element thus arranged, in the valve body and particularly in the flow control element, with the flow control element in the closed position it is possible, by removing the bottom plug 6, to inspect the filtering element 8, replace it and/or clean it, by means of a simple and manual removal of said filtering element.

With the flow control element 7 in the closed position, again by removing the bottom plug 6, it is possible not only to inspect the filter and clean it as described previously but also to clean the material deposited in the space that exists between the filtering element 8 and the plug 6, and also to clean the inner surface of the filter (for example by means of a brush) without having to extract the filter from its receptacle within the flow control element 7.

The arrangement of the filtering element 8 according to the invention in the flow control element 7 prevents the filtering element 8 from becoming clogged easily, since the filtered material settles by gravity downwardly in the space 12 and therefore does not settle below the filtering surface of the filtering element 8. In this manner, intense variations of the load losses that are characteristic of the valve with filter and/or even substantially total clogging of the passage of fluid are avoided.

Moreover, in emergency conditions it is also possible to clean the filtering element 8 with the flow control element 7 in a fully open position, by partially unscrewing the bottom plug 6 so as to make the material deposited on the bottom exit outward, together with a minimal part of the passage fluid, avoiding in any case in this way the interruption of the flow of fluid between the inlet and the outlet 4 of the valve.

In practice it has been found that the valve with filter according to the present invention achieves fully the intended aim and objects, since it allows to avoid unwanted clogging of the filtering element, allowing at the same time easy inspection, cleaning and removal of said filtering element.

In practice, the materials used, as well as the contingent shapes and dimensions, may be any according to requirements and to the state of the art.

The disclosures in Italian Utility Model Application No. MI2013U000215 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A valve (1) comprising a valve body (2) provided with an inlet (3) and an outlet (4), a flow control element (7) being interposed between said inlet (3) and said outlet (4), the flow control element (7) being actuated by an actuation shaft (9), **characterized in that** it comprises a filtering element (8) that is accommodated in a seat defined in said flow control element, said seat having an axis that is perpendicular to the axis of the inlet (3) and of the outlet (4) of said valve body (2).

2. The valve according to claim 1, **characterized in that** said filtering element (8) is fixed internally to said flow control element (7) by interference between the outer surface of the filtering element (8) and the inner surface of the seat that is defined in said flow control element.

3. The valve according to claim 1 or 2, **characterized in that** said filtering element (8) rotates integrally with said flow control element (7).

4. The valve according to one or more of the preceding claims, **characterized in that** it comprises a drain (5) arranged on the bottom of said valve body (2), at said flow control element (7), said drain (5) being adapted to be closed by a plug (6).
